# EUROPEAN PATENT SPECIFICATION

(11) **EP 0 606 631 B1**
(45) Date of publication and mention of the grant of the patent: **02.05.1997**
(21) Application number: 93120680.9
(22) Date of filing: 22.12.1993
(51) Int. Cl.: F16M 11/32

(54) **Tripod for measuring machine**
Dreibeinstativ für Messapparat
Trépied pour appareil de mesure

(30) Priority: 25.12.1992 JP 88880/92 U
(43) Date of publication of application: 20.07.1994
(73) Proprietor: Kubo, Akio, Kanagawa-ken (JP)
(72) Inventor: Naoi, Hiroshi, c/o Ushikata Mfg. Co., Ltd., Tokyo (JP)
(74) Representative: Walter, Helmut, Dipl.-Ing.

(56) References cited:
- DE-A- 2 046 923
- DE-A- 2 742 474
- DE-A- 3 441 225
- DE-U- 8 510 861
- US-A- 4 767 090

## Description

### BACKGROUND OF THE INVENTION

### 1. Field of the invention

The present invention relates to a tripod for a measuring machine having three legs each of which comprises two first pipe means parallel to each other and two other pipe means parallel to each other and to the first pipe means, a fastener means for adjusting the length of the leg by adjusting the second pipe means in relation to the first pipe means in the longitudinal direction of the pipe means, and a foot provided at an end of the leg.

### 2. Description of the Prior Art

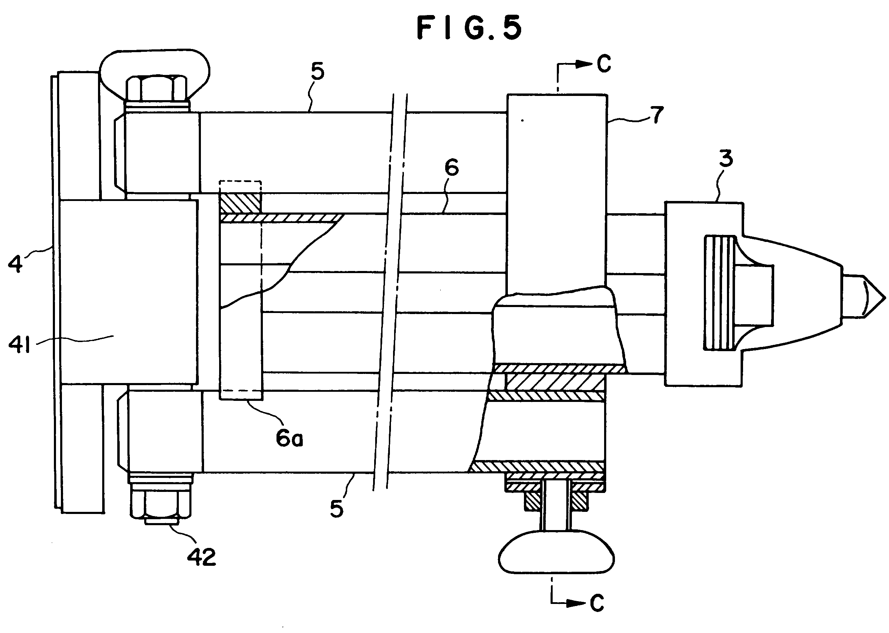

Fig. 5 depicts a partly cross-sectional plan view illustrating a single leg of a usual tripod for measuring instruments and Fig. 6 depicts a cross-sectional view from line C-C of Fig. 5. The prior tripod has legs pivoted to leg mounting portion 41 of base 4 by mounting bolt 42 so as to be capable of rotating to a certain degree.

Each leg has two pipes 5 parallel with each other and a fastener 7 provided at the ends of pipes 5. There is a pipe interconnector 6 between the two pipes 5 passing through fastener 7. Pipe interconnector 6 has a sliding piece 6a fixed to its upper end. The sliding piece 6a slidably contacts the pipes 5 to maintain the relative positions of pipes 5 and the pipe interconnector 6. The pipe interconnector 6 also has a tool 3 fixed to its lower end.

As shown in Fig.6, fastener 7 is set so as to make the two pipes 5 parallel with each other and the intermediate pipe interconnector 6 to be enclosed by the two pipes 5. Fastener 7 has frame 7a fixed to one of the pipes 5 on one side thereof by means of fixing spacer 7b. Fastener 7 also has a tightening bolt 7d on the other side to laterally press the other pipe 5 through the movable spacer 7c. In addition, the fastener 7 has two intermediate spacers 7e disposed between the pipes 5 and the intermediate pipe interconnector 6.

The pipe interconnector 6 has two parallel pipes and two parallel plates. The pipe interconnector 6 is structured so as to have a high strength adequate to endure a presssing force applied on the extension of the two plates in their lateral direction.

Such a prior tripod as described above is retracted by loosening the tightening bolt 7d and pressing the pipe interconnector 6 thereinto. Reversely, it is activated by pulling out the pipe interconnector 6 and the tightening bolt 7d.

DE-A-3441225 shows a telescopic tripod for machines like optical instruments, cameras etc. which comprises sliding twin pipe sections and slidable sleeves, which are mounted on the pipes. Said sleeves can be adjusted to and fastened in any given position by means of the fasteners (clamping pieces) which work internally on the aforementioned pipes.

A construction as shown in figures 5 an 6 is disadvantageous in that such a construction of the prior tripod can have only two modes. In the retracted mode, the tripod is longer than the half of its full length even if it is fully retracted. It is not convenient to be carried by a person.

Also, it is disadvantageous that the prior tripod is too large in contrast to recent compact measuring instruments, thus it is hard to use.

In order to solve the foregoing problems of the prior art, it is an object of the present invention to provide a tripod for a measuring machine whose legs can be retracted to a greater extent and maintain the same length as the prior art when in use and has a low overall weight and a construction aimed at ease of transportation.

### SUMMARY OT THE INVENTION

Briefly, the foregoing object is accomplished in accordance with the preferred embodyment of the invention by a tripod for a measuring machine according to the present invention. The tripod has three legs, each of which comprises the following:
first and other pipe means which are parts of two telescopic multiple pipes;
the outside diameter of the inner pipe of each of the multiple pipes is smaller than the inside diameter of the outer pipe;
the inner pipe has a radially extended portion at one end which is inserted in the outer pipe to slidably contact with the inside of the outer pipe so that the inner pipe is centered in the outer pipe;
a contacting piece is inserted into a portion of the outer pipe where the inner pipe is inserted into the outer pipe so that it keeps a clearance between the outer pipe and the inner pipe, the contacting piece having a positioning projection on its outside to engage with the outer pipe;
the outer pipe has a positioning hole on its outside where the fastener is positioned and two slots on its inside where the fastener is positioned; the positioning hole loosely receives the positioning projection and the slots are passed through by fastening corners of the fastener;
the fastener is formed of a frame enclosing the two multiple pipes;
each side of the frame contacts with the outside half of each outer pipe of the two multiple pipes;
the frame has the fastening corners at positions corresponding to the slots of each outer pipe to pass through the slots and exert pressure on the inner pipe;
the frame has a through-hole in its center for fastening by means of a bolt and
the inner pipe is positioned outside of at least one innermost pipe, which innermost pipe can be selectively fixed or slidable, respectively to the inner pipe/outer pipe means by at least one second fastener means in the same manner as the inner pipe can be selectively fixed or slidable, respectively, to the outer pipe.

The operation is carried out as follos:

Upon tightening of the bolt of each fastener the two sides of the fastener are subjected to a force which moves them closer to each other. A force is exerted on the fastening corners inserted in the slots so that they press the inner pipe. As a result, the inner pipe is pressed toward the contacting piece, thereby fixing the inner pipe to the outer pipe.

Reversely, if the bolt is loosened , the fastening corners are released. The inner pipe can slide relative to the outer pipe, thus the leg can be pulled out or pushed in, and this can be done with the outer pipe and the inner pipe of the first group of pipes and the inner pipe and the innermost pipe of the second group of pipes.

The foregoing and other objects, advantages, manners of operation and novel features of the present invention will be understood from the following detailed description when read in connection with the accompanying drawings.

### BRIEF DESCRIPTION OF THE DRAWINGS

In the accompanying drawings:
- Fig. 1: is a cross-sectional view from line A-A of Fig.2a illustrating a fastener of an embodiment of a tripod for a measuring machine according to the present invention.
- Figures 2a,2b,: are an external view of a single foot of an embodiment of a tripod for measuring machine according to the present invention; Fig. 2a is a plan view illustrating the single leg, with a multi-pipe thereof being partly cross-sectioned; and Fig.2b is a side view illustrating the single leg, with a multipipe thereof being partly cross-sectioned.

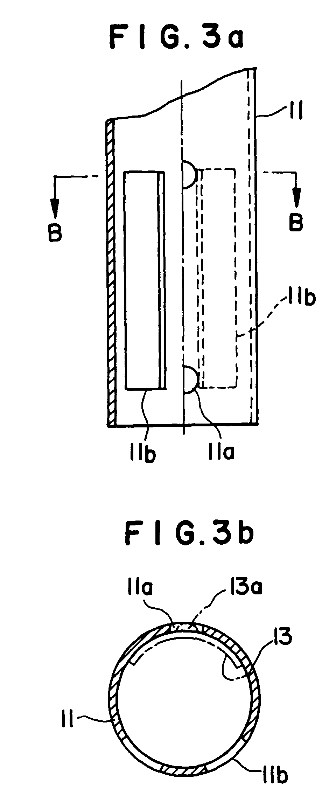

- Figures 3a,3b: are structural views illustrating an insertion end of an outer pipe of a single leg of a tripod of an embodiment according to the present invention; Fig.3a is a partly cross-sectional side view illustrating the insertion end; and Fig.3b is a cross-sectional view from line B-B of Fig.3a.
- Figures 4a,4b: are external views illustrating a contact piece of a tripod of an embodiment according to the present invention; Fig.4a is a top view illustrating the contact piece; Fig.4b is a side view illustrating the contact piece.
- Fig. 5: is a partly cross-sectional plan view illustrating a single leg of a usual tripod for a measuring instrument.
- Fig. 6: is a cross-sectional view from line C-C of Fig.5.

Key to drawing
- 1 =: multiple pipes
- 11 =: outer pipe
- 11a=: positioning hole
- 11b=: slots
- 12 =: inner pipe
- 12a=: radially extended portion
- 14 =: innermost pipe
- 13 =: contacting piece
- 2 =: fastener
- 21 =: frame
- 21a=: fastening corners
- 21b=: through-hole
- 22 =: bolt
- 23 =: butterfly nut

### DETAILED DESCRIPTION OF THE PREFERRED EMBODIMENT

The following describes in detail an embodiment according to the present invention by reference to the accompanying drawings.

Now, referring to the drawings mentioned above, the tripod for a measuring machine according to the present invention has three legs. Each of the legs comprises two telescopically slidable multiple pipes 1 parallel with each other, a fastener 2 for adjusting the multiple pipe 1 to a desired extension and a foot 3. Each multiple pipe 1 in this embodiment is a triple pipe consisting of an outer pipe 11, an inner pipe 12 and an innermost pipe 14.

One end of the outer pipe 11 of multiple pipe 1 is pivoted to the leg mounting portion 41 of base 4 by means of mounting bolt 42 so that it is rotatable to a certain degree as is the prior art.

Inner pipe 12 of multiple pipe 1 has a smaller outer diameter than the inner diameter of outer pipe 11 so that it can be inserted into the outer pipe 11. Inner pipe 12 has a radially extended portion 12a at its end where the inner pipe 12 is inserted into the outer pipe 11, to slidably contact with the inside of outer pipe 11 so that the inner pipe 12 can be centered in the outer pipe 11 and the outside of inner pipe 12 and the inside of outer pipe 11 can keep a constant clearance.

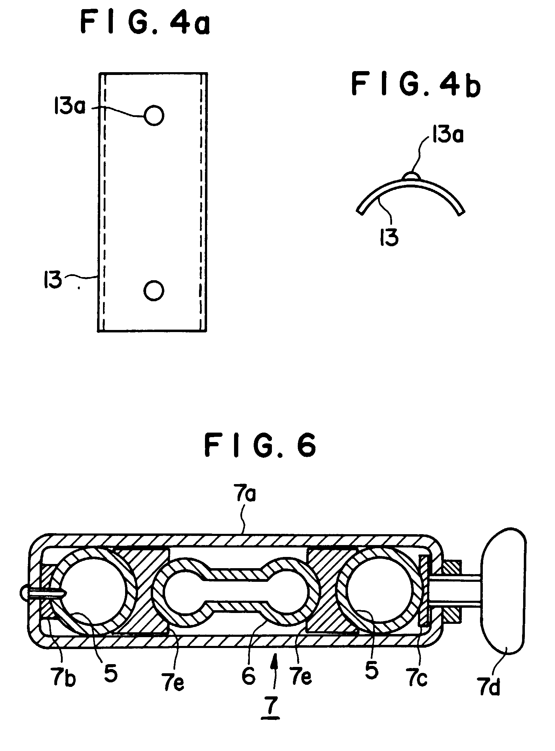

The other end of the outer pipe 11 is an insertion end. The insertion end has a fastener 2 provided thereon. At a position where fastener 2 is disposed, contacting piece 13 shown in Fig. 4 is inserted in the clearance between outer pipe 11 and inner pipe 12. Outer pipe 11 has a positioning hole 11a and two slots 11b so that the positioning projection 13a of contacting piece 13 is loosely received in positioning hole 11a and fastening corners 21a of fastener 2 extending through respective slots 11b.

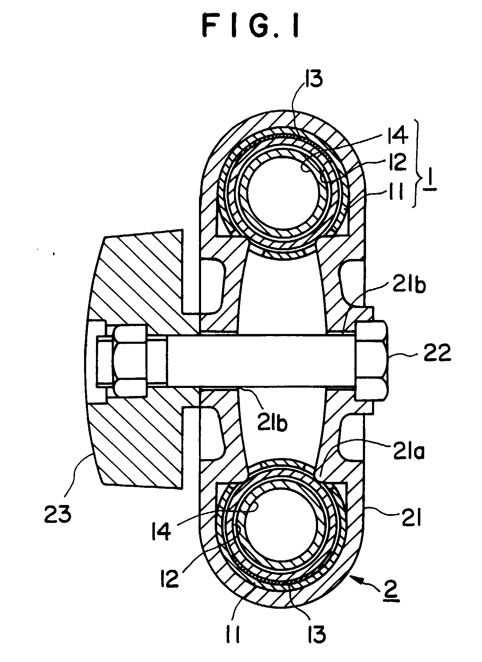

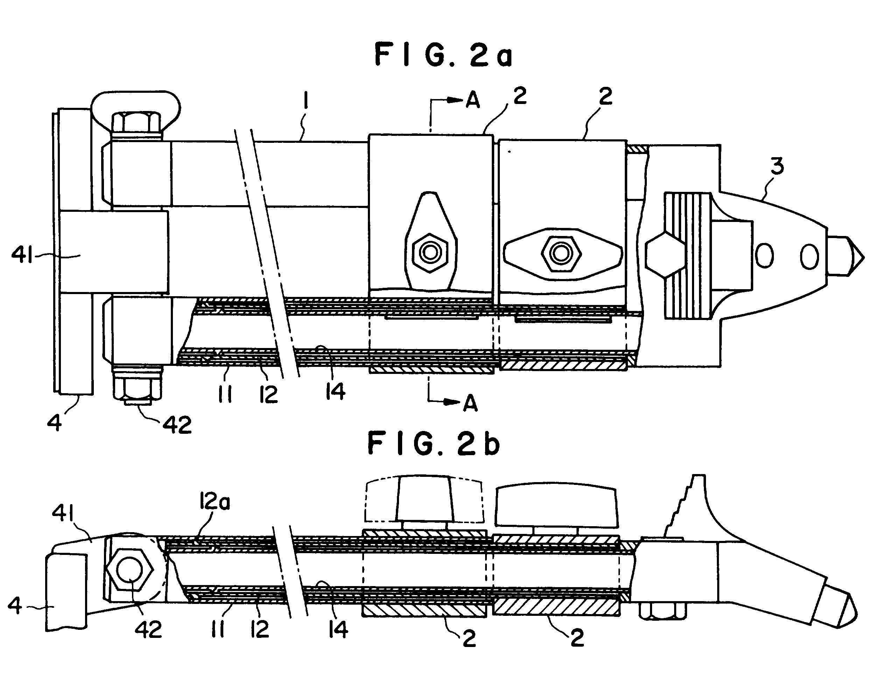

Fastener 2, as shown in Fig. 1, which is a cross-sectional view from line A-A of Fig.2a, has a frame 21 for enclosing the insertion ends of two parallel multiple pipes 1. Each of the two sides of frame 21 contacts with the outside halve of each outer pipe 11 of two multiple pipes 1, respectively. Frame 21 has fastening corners 21a at the positions corresponding to slots 11b of each outer pipe 11 to pass through slots 11b to exert pressure on the inner pipe 12. Frame 21 also has a through-hole 21b with a spot face in its center so that the hexagonal head of bolt 22 engages therein and frame 21 is fastened by means of bolt 22 and butterfly nut 23.

The above-mentioned fastener 2 and the contacting piece 13 are made of synthetic resin. These are formed so as not to damage the metal outer pipes 11 and inner pipes 12 even if they contact the outer pipes 11 and inner pipes 12 in a sliding motion.

In turn, the following describes an extension and housing operation performed by each leg of the tripod. Upon loosening of the butterfly nut 23 a tightening force is released from the center of frame 21 of fastener 2. This also releases the pressing force exerted by the fastening corners 21a from the inner pipes 12, thereby permitting the outer pipes 11 and inner pipes 12 to slide against each other.

In that state with the multiple pipes 1 fully extended, the tripod is set for use. With pipes 1 pressed in the tripod is housed. After this, if butterfly nut 23 is turned to fasten frame 21 on both sides thereof, fastening corners 21a exert strong pressure on the inner pipes 12. As a result, each inner pipe 12 is fastened in three directions by the two fastening corners 21a and the contacting piece 13. Thus, the outer pipes 11 and inner pipes 12 are fixed to each other and cannot slide.

The inner pipe 12 and the innermost pipe 14 can be either fixed or permitted to slide in respect of each other by the fastener 2 which is positioned on the right hand side of Fig.2 in the same manner as described above in context of the outer pipe 11 and inner pipe 12. Since the pipe 1 is made up of the triple pipes, the tripod can be made shorter in housing. However, the multiple pipe 1 does not have to be a triale pipe but can be a quadriple or the like as well.

As described so far, one feature of the present invention is that each leg of the tripod has two multiple pipes 1 so that its width can be made narrower than that of the prior art. Another feature of the present invention is that each of the multiple pipes 1 can be made up of triple pipes so that the tripod can be made shorter in housing, and thus, smaller.

Another feature of the present invention is that - unlike with the standard tripods for cameras - each leg of the tripod is made up of two multiple pipes 1 which make the tripod as stable as tripod normally used for measuring instruments.

## Claims

1. A tripod for a measuring machine having three legs each of which comprises two first pipe means (11,11) parallel to each other and two other pipe means (12,12) parallel to each other and to the first pipe means, a fastener (2) for adjusting the length of the leg by adjusting the second pipe means (12,12) in relation to the first pipe means (11,11) in the longitudinal direction of the pipe means, and a foot (3) provided at an end of the leg,
whereby
the first and other pipe means are components of two telescopic multiple pipes (1);
the inner pipe (12) of each of the multiple pipes has a smaller outer diameter than the inside diameter of the outer pipe (11);
at one end the inner pipe (12) has a radially extended portion (12a) inserted in the outer pipe (11) to slidably contact with the inside of the outer pipe (11)
so that the inner pipe (12) is centered in the outer pipe (11);
a contacting piece (13) is inserted in that portion of the outer pipe (11) where the inner pipe is inserted in the outer pipe (11) so that it maintains a clearance between the outer pipe (11) and the inner pipe (12), the contacting piece (13) having a positioning projection (13a) on the outside thereof to engage with the outer pipe (11);
the outer pipe (11) has a positioning hole (11a) on its outside and two slots (11b) on its inside facing the central part of the fastener (2); the positioning hole (11a) loosely receives the positioning projection (13a) and the slots (11b) receive fastening corners (21a) of the fastener (2);
the fastener (2) is formed of a frame (21) enclosing the two multiple pipes (1);
each of the two sides of the frame (21) is in contact with the outside half of each outer pipe (11) of two multiple pipes (1) respectively;
the frame (21) has fastening corners (21a) at positions corresponding to the slots (11b) of two multiple pipes of each outer pipe (11) so that they can pass through the slots (11b) and exert pressure on the inner pipe (12);
and
the frame (21) has a through-hole (21b) in its center for fastening by means of a bolt (22) and
whereby the inner pipe (12) is positioned outside of at least one innermost pipe (14), which innermost pipe (14) can be selectively fixed or slidable, respectively, to the inner pipe/outer pipe means by at least one second fastener means (2) in the same manner as the inner pipe (12) can be selectively fixed or slidable, respectively, to the outer pipe.

## Patentansprüche

1. Dreibeinstativ für einen Meßapparat mit drei Beinen, von denen jedes zwei zueinander parallele Rohrmittel (11,11) und zwei ebenfalls zueinander und zu den ersten Rohrmitteln parallele weitere Rohrmittel (12,12) aufweist sowie ein Befestigungsmittel (2) zum Einstellen der Länge des jeweiligen Beines durch Einstellen der Länge der zweiten Rohrmittel (12,12) relativ zu den ersten Rohrmitteln (11,11) in der Längsrichtung der Rohrmittel sowie schließlich einem Fuß (3) am einen Ende des Beines, wobei
die ersten und die weiteren Rohrmittel Komponenten zweier teleskopartigen Mehrfachrohre (1) sind;
das Innenrohr (12) jedes Mehrfachrohres einen Außendurchmesser hat, der kleiner als der Innendurchmesser des Außenrohres (11) ist;
das Innenrohr (12) an seinem einen Ende einen radial gerichteten Teil (12a) aufweist, der in das Außenrohr (11) eingesetzt ist, um mit der Innenseite des Außenrohres (11) Gleitberührung zu haben,
sodaß das Innenrohr (12) im Außenrohr (11) zentriert ist;
wobei weiter
ein Kontaktstück (13) in den Teil des Außenrohres (11) eingesetzt ist, in dem das Innenrohr in das Außenrohr (11) eingesetzt ist, sodaß ein Spiel zwischen Außenrohr (11) und Innenrohr (12) besteht und wobei das Kontaktstück (13) eine Positioniernase (13a) auf seiner Außenseite aufweist, um mit dieser Positioniernase mit dem Außenrohr (11) zusammenzuwirken;
das Außenrohr (11) eine Positionieraufnahme (11a) auf seiner Außenseite und zwei Schlitze (11b) auf seiner Innenseite gegenüber dem zentralen Teil des Befestigungsmittels (2) aufweist, wobei die Positionieraufnahme (11a) mit Spiel die Positioniernase (13a) aufnimmt, während die Schlitze (11b) Befestitungsecken (21a) des Befestigungsmittels (2) aufnehmen;
das Befestigungsmittel (2) von einem Rahmen (21) gebildet ist, der beide Mehrfachrohre (1) umschließt;
jede der beiden Seiten des Rahmens (21) Kontakt hat mit der äußeren Hälfte des Außenrohres (11) des jeweiligen der beiden Mehrfachrohre (1);
der Rahmen (21) Befestigungsecken (21a) in Bereichen aufweist, die mit den Schlitzen (11b) der beiden Mehrfachrohre jedes Außenrohres (11) korrespondieren, sodaß die Befestigungsecken durch die Schlitze (11b) hindurch Druck auf das Innenrohr (12) ausüben können und
der Rahmen (21) in seinem Zentrum Durchgangslöcher (21b) zur Befestigung mittels eines Bolzens (22) aufweist und
wobei schließlich das Innenrohr (12) außerhalb zumindest eines innersten Rohres (14) positioniert ist, das mittels zumindest eines zweiten Befestigungsmittels (2) in der gleichen Weise gegenüber dem Innenrohr/Außenrohr wahlweise fixiert oder gleitfähig sein kann, wie das Innenrohr (12) gegenüber dem Außenrohr fixiert bzw. gleitfähig sein kann.

## Revendications

1. Trépied pour dispositif de mesure ayant trois pattes, dont chacune comporte deux premiers moyens formant tuyaux (11, 11) parallèles l'un à l'autre et deux autres moyens formant tuyaux (12, 12) parallèles l'un à l'autre et aux premiers moyens formant tuyaux, un dispositif de fixation (2) pour régler la longueur de la patte par réglage des seconds moyens formant tuyaux (12, 12) par rapport aux premiers moyens formant tuyaux (11, 11), dans la direction longitudinale des moyens formant tuyaux, et un pied (3) agencé au niveau d'une extrémité de la patte, de sorte que :
les premiers et autres moyens formant tuyaux sont des composants de deux tuyaux multiples télescopiques (1) ;
le tuyau intérieur (12) de chacun des tuyaux multiples a un diamètre extérieur plus petit que le diamètre intérieur du tuyau extérieur (11) ;
au moins une extrémité du tuyau intérieur (12) a une partie s'étendant radialement (12a) insérée dans le tuyau extérieur (11) pour être en contact coulissant avec l'intérieur du tuyau extérieur (11)
de sorte que le tuyau intérieur (12) est centré dans le tuyau extérieur (11) ;
une partie de contact (13) est insérée dans cette partie du tuyau extérieur (11) où le tuyau intérieur est inséré dans le tuyau extérieur (11) de sorte qu'il maintient un jeu entre le tuyau extérieur (11) et le tuyau intérieur (12), la partie de contact (13) ayant une saillie de positionnement (13a) située sur l'extérieur de celle-ci pour venir en prise avec le tuyau extérieur (11) ;
le tuyau extérieur (11) a un trou de positionnement (11a) sur son extérieur et deux fentes (11b) sur son intérieur situé en vis-à-vis de la partie centrale du dispositif de fixation (2) ; le trou de positionnement (11a) reçoit de manière lâche la saillie de positionnement (13a) et les fentes (11b) reçoivent des coins de fixation (21) du dispositif de fixation (2) ;
le dispositif de fixation (2) est constitué d'un châssis (21) entourant les deux tuyaux multiples (1) ;
chacun des deux côtés du châssis (21) est en contact avec la moitié extérieure de chaque tuyau extérieur (11) de deux tuyaux multiples (1) respectivement ;
le châssis (21) a des coins de fixation (21a) au niveau des positions correspondant aux fentes (11b) des deux tuyaux multiples de chaque tuyau extérieur (11) de sorte qu'ils peuvent passer à travers les fentes (11b) et exercer une pression sur le tuyau intérieur (12) ; et
le châssis (21) a un trou traversant (21b) dans son centre pour la fixation par l'intermédiaire d'un boulon (22) et
de sorte que le tuyau intérieur (12) est positionné à l'extérieur d'au moins un tuyau le plus intérieur (14), lequel tuyau le plus intérieur (14) peut être sélectivement fixé ou coulissant, respectivement, sur les moyens formant tuyau intérieur/tuyau extérieur par au moins des seconds moyens formant dispositif de fixation (2) de la même manière que le tuyau intérieur (12) peut être sélectivement fixé ou coulissant, respectivement, sur le tuyau extérieur.
